# EUROPEAN PATENT APPLICATION

(11) **EP 3 543 676 A1**
(43) Date of publication of application: **25.09.2019**
(21) Application number: 19150083.4
(22) Date of filing: 02.01.2019
(51) Int. Cl.: G01N 3/04, G01N 3/08

(54) **GRIPPING TEETH AND GRIPPER**

(30) Priority: 22.03.2018 JP 2018001045
(71) Applicant: Shimadzu Corporation, Kyoto 604-8511 (JP)
(72) Inventor: KANEDA, Masaki, Kyoto-shi,, Kyoto 6048511 (JP)
(74) Representative: Mewburn Ellis LLP

(57) **Abstract**

A gripping tooth (10), mounted to a gripper (1) of a material testing machine and used for grasping a test piece (TP), wherein
the material testing machine applies a tensile load on the test piece (TP) to carry out a test,
a plurality of protrusions are formed on a tooth surface (15) of the gripping tooth (10), and intervals between the protrusions are set to 0.1 mm to 0.4 mm.

## Description

### BACKGROUND OF THE INVENTION

### Technical Field

The disclosure relates to gripping teeth of grippers which grasp a test piece in a material testing machine conducting a tensile test, and to the grippers.

### Related Art

As a material testing machine which conducts a tensile test, the following one is known which includes: a pair of screw rods erected on a table; a cross-head, which is bridged over the pair of the screw rods and moves up and down along the screw rods; and grippers, which are arranged on each of the table and the cross-head. In such a material testing machine, the tensile test in which a tensile load is applied to a test piece is conducted by moving the cross-head in a state that two ends of the test piece are grasped by the gripper on a table side and the gripper on a cross-head side.

In the grippers for the material testing machine which conducts the tensile test, in order to reliably grasp the test piece, gripping teeth, on which saw-tooth-shaped concavities and convexities are engraved, are mounted to sides which sandwich the test piece. Furthermore, the gripping teeth mounted to the grippers are selected corresponding to a purpose of the test, and a shape, a size and a material quality of the test piece (see patent literature 1).

### [Literature of related art]

### [Patent literature]

[Patent Literature 1] Japanese Laid-open No. 2002- 139411

### SUMMARY

### [Problems to be Solved]

In the tensile test, when a test force in a tensile direction is applied to the test piece, it is necessary that the gripping teeth of the grippers which grasp two ends of the test piece and the test piece must not slide against the test force. Multiple protrusions (for example, the convexities of the saw-tooth-shaped concavities and convexities) which are provided on tooth surfaces of the gripping teeth in contact with the test piece are deeply bitten into the test piece via a force clamping the test piece, thereby countering the test force in the test. On the other hand, strength decreases at places of the test piece into which the protrusions of the gripping teeth bite. Besides, if the protrusions bite into the test piece too deeply, a so-called chuck breakage occurs in which the test piece is broken at grasped parts, and the test cannot be carried out correctly.

In the gripping teeth which are mounted to the grippers grasping the test piece made of steel, plastic and so on, the protrusions are arranged on the tooth surfaces with pitches of about 1 mm to 0.5 mm. For example, when a composite material of carbon fibers and a resin, such as CFRP (Carbon Fiber Reinforced Plastics) and so on, is grasped by such conventional gripping teeth for metals, if the test piece is clamped directly by the gripping teeth, the protrusions of the gripping teeth bite deeply, and the strength at the grasped parts decreases. Therefore, preparation of a tabbed test piece is required in which a reinforcement material referred to as a tab is adhered to the grasped parts of the test piece, and it takes time to prepare the test piece.

The disclosure is achieved to solve the problems above, and aims to provide gripping teeth and grippers capable of reliably grasping a test piece to conduct a material test even for a brittle material or a composite material.

### [Means to Solve the Problems]

The invention recited in technical solution 1 is a gripping tooth mounted to a gripper of a material testing machine and used for grasping a test piece, wherein the material testing machine applies a tensile load on the test piece to carry out a test, multiple protrusions are formed on a tooth surface of the gripping tooth, and intervals between protrusions are set to 0.1 mm to 0.4 mm.

The invention recited in technical solution 2 is the gripping tooth recited in technical solution 1, wherein the intervals between the protrusions are set to 0.25 mm.

The invention recited in technical solution 3 is the gripping tooth recited in technical solution 1 or 2, wherein the protrusions on the tooth surface are formed by teeth cutting in two directions, one of which is inclined clockwise by 20 degrees and the other of which is inclined counterclockwise by 20 degrees with respect to a horizontal direction.

The invention recited in technical solution 4 is a gripper to which the gripping tooth recited in any one of technical solutions 1 to 3 are mounted.

### [Effect]

According to the invention recited in technical solutions 1 to 4, the test piece is grasped by the gripping teeth having the tooth surfaces on which the intervals between the protrusions are reduced and the amount of the protrusions is increased, and thus a force applied to each protrusion is reduced. Therefore, the depth by which each protrusion bites into the test piece can be shallow. Therefore, the test piece strength at grasped parts of the test piece can be prevented from decreasing.

According to the invention recited in technical solution 2, by setting the intervals between the protrusions on the tooth surfaces of the gripping teeth to 0.25 mm, particularly, in a tensile test of thermoplastic carbon fiber reinforced resin (Carbon Fiber Reinforced Thermo Plastics (CFRTP)), the test piece can be directly grasped by the gripping teeth without preparing a tabbed test piece. That is, a balance between non-uniformity of organizations scattered inside the test piece made of the CFRTP and the intervals of the protrusions and a depth of the biting of the protrusions is good, and an effect is exhibited in preventing the test piece strength at the grasped parts of the test piece from decreasing.

### BRIEF DESCRIPTION OF THE DRAWINGS

FIG. 1 is a schematic drawing of a material testing machine including grippers 1 of the disclosure.
FIG. 2 is a cross-section view of main portions of the gripper 1 of the disclosure.
FIG. 3 is a schematic drawing showing gripping teeth 10 of the disclosure.
FIG. 4 is a description drawing showing protrusions formed on tooth surfaces 15.
FIG. 5 is a schematic drawing of gripping teeth 20 of another embodiment.

### DESCRIPTION OF THE EMBODIMENTS

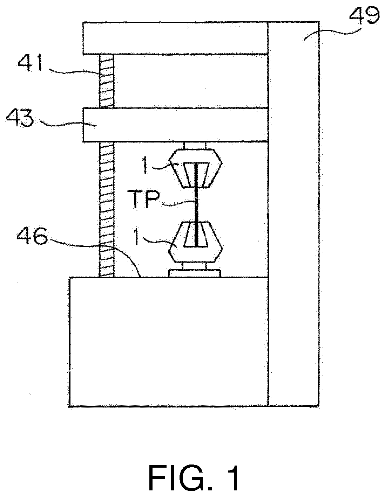

Next, embodiments of the disclosure are described based on drawings. FIG. 1 is a schematic drawing of a material testing machine including grippers 1 of the disclosure.

The material testing machine which conducts a tensile test includes: a pair of screw rods 41 erected on a table 46; a cross-head 43, which is bridged over the pair of the screw rods 41 and moves up and down along the screw rods 41; and grippers 1, which are arranged on each of the table 46 and the cross-head 43. Furthermore, in FIG. 1, a state is illustrated in which one of the pair of the screw rods 41 is covered by a cover member 49. In such a material testing machine, the tensile test, in which a tensile test force is applied to a test piece TP, is conducted by moving the cross-head 43 upward in a state that two ends of the test piece TP are grasped by the gripper 1 on the table 46 side and the gripper 1 on the cross-head 43 side.

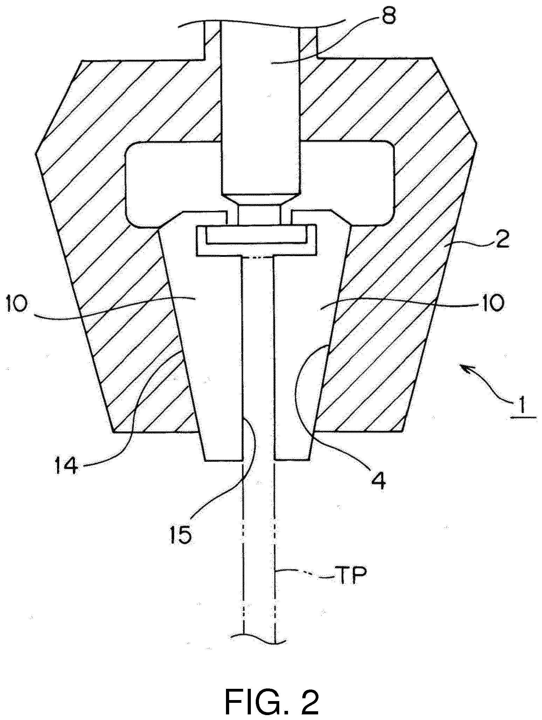

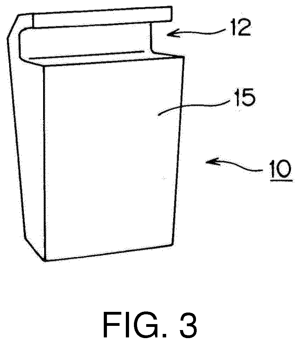

FIG. 2 is a cross-section view of main portions of the gripper 1 of the disclosure. FIG. 3 is a schematic drawing showing gripping teeth 10 of the disclosure.

The gripper 1 is a wedge-shaped gripper, and includes a gripper body 2 inside which a wedging surface 4 is formed, and a pair of gripping teeth 10 in which one side surface portion is formed into a tapered surface 14 that has the same angle as the wedging surface 4. The pair of the gripping teeth 10 are supported by a support shaft 8 attached to a test machine body, and a clamping force for grasping the test piece TP is applied to the pair of the gripping teeth 10 by moving the gripper body 2 up and down along the support shaft 8. That is, both end portions of the strip-shaped test piece TP are grasped respectively by the pair of the gripping teeth 10 of each of the grippers 1 which are arranged on the table 46 and the cross-head 43 of the material testing machine.

As shown in FIG. 2 and FIG. 3, the gripping teeth 10 have tooth surfaces 15, on which protrusions are directly formed, on a surface of a side opposite to the tapered surface 14, and are mounted to a leading end of the support shaft 8 inside the gripper body 2 via a support shaft engagement portion 12.

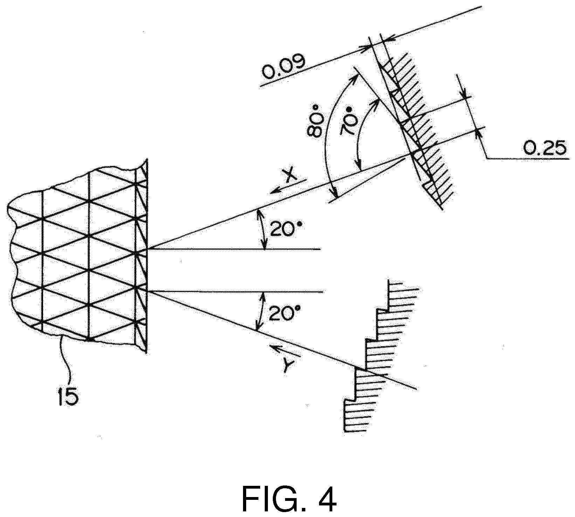

FIG. 4 is a description drawing showing the protrusions formed on the tooth surfaces 15. In FIG. 4, the tooth surfaces 15 are enlarged partially to be shown; furthermore, cross-sections of teeth cutting from an X-direction and cross-sections of teeth cutting from a Y-direction are shown.

On the tooth surfaces 15, multiple blade-shaped protrusions having pointed leading ends are formed. The protrusions are also referred to as teeth, and the teeth are formed by scraping surfaces of gripping teeth members with a blade in which a blade edge has an angle of 80° in the X-direction which is inclined counterclockwise by 20° from a horizontal direction and in the Y-direction which is inclined clockwise by 20° from the horizontal direction. One surface of the protrusion in which the cross-section shape is triangular is formed at a place of 70° from a vertical line, and another surface is formed at a place opened from the aforementioned surface by 80°. Pitches of the teeth engraved in the X-direction and pitches of adjacent teeth engraved in the Y-direction are respectively 0.25 mm, and depths are 0.09 mm. Furthermore, shapes formed by crossing the teeth cutting from two directions in this way are similar to teeth cutting of a double-cut file, so that the gripping teeth of the material testing machine are also referred to as file teeth. In addition, a predefined surface treatment or heat treatment is performed on the tooth surfaces 15 on which the file teeth are formed, and hardness and so on are adjusted to be target values.

During the formation of multiple protrusions on the tooth surfaces 15, an amount of protrusions in a longitudinal direction of the tooth surface 15, which is the same as a load direction of the tensile test, can be increased by setting inclination angles of two teeth cutting directions symmetrically with respect to the horizontal direction by 20°. Furthermore, the inclination angle of the teeth cutting can be changed in a range in which teeth with appropriate depths can be set.

When the test piece TP is grasped by the gripping teeth 10 having the tooth surfaces 15 on which the intervals between the protrusions are reduced to 0.25 mm and an amount of the protrusions is increased in the aforementioned way, a force applied to each protrusion is reduced, so that the depth by which each protrusion bites into the test piece TP can be shallow. Therefore, the test piece strength at grasped parts of the test piece TP can be prevented from decreasing. Therefore, the test piece TP can be reliably grasped in the test to conduct the material test even for a brittle material or a composite material. In addition, the test piece TP made of a brittle material or a composite material can be directly grasped by using the gripping teeth 10, so that preparation of a tabbed test piece is not required.

Furthermore, the intervals between the protrusions are desirable to be 0.1 mm to 0.4 mm, which is smaller than intervals between protrusions which are formed on conventional gripping teeth for metals. Furthermore, when the intervals between the protrusions are set to 0.25 mm as in the embodiment, in the tensile test of the CFRTP in particular, a balance between non-uniformity of organizations scattered inside the test piece, and the intervals of the protrusions and the depths by which the protrusions bite is good, and an effect is exhibited in preventing the test piece strength at the grasped parts of the test piece TP from decreasing.

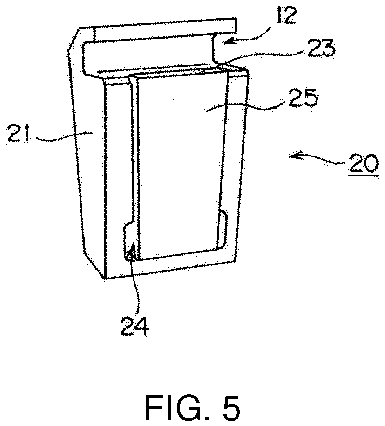

FIG. 5 is a schematic drawing of gripping teeth 20 of another embodiment. The same symbol is attached to a configuration the same as the embodiment shown in FIG. 3, and specific description is omitted.

The gripping teeth 20 are components in which board members 23 having tooth surfaces 25 are inserted into grooves 24 formed on surfaces of gripping tooth bodies 21 opposite to the tapered surface 14. The protrusions formed on the tooth surfaces 25 are formed into protrusions having the same pitch and the same shape as the protrusions shown in FIG. 4. By mounting the gripping teeth 20 to the gripper 1 of FIG. 2, similar to the case when the gripping teeth 10 are mounted, the test piece TP is reliably grasped by fine teeth of the tooth surfaces 25, and excessive biting of the protrusions into the test piece TP can be relieved, thereby preventing the test piece strength from being decreasing.

Furthermore, grippers provided with gripping teeth that include the same tooth surfaces as the tooth surfaces 15 shown in FIG. 4 are not limited to the wedge-shaped gripper. On tooth surfaces of gripping teeth for a plane-shaped gripper, intervals and shapes of protrusions which are the same as the tooth surfaces 15 of the gripping teeth of the disclosure can be used.

### [Description of the Symbols]

- 1: gripper
- 2: gripper body
- 4: wedging surface
- 8: support shaft
- 10: gripping tooth
- 12: support shaft engagement portion
- 14: tapered surface
- 15: tooth surface
- 20: gripping tooth
- 21: gripping tooth body
- 23: board member
- 24: groove
- 25: tooth surface
- 41: screw rod
- 43: cross-head
- 46: table
- 49: cover member
- TP: test piece

## Claims

1. A gripping tooth (10), mounted to a gripper (1) of a material testing machine and used for grasping a test piece (TP), wherein
the material testing machine applies a tensile load on the test piece (TP) to carry out a test,
a plurality of protrusions are formed on a tooth surface (15) of the gripping tooth (10), and intervals between the protrusions are set to 0.1 mm to 0.4 mm.

2. The gripping tooth (10) according to claim 1, wherein
the intervals between the protrusions are set to 0.25 mm.

3. The gripping tooth (10) according to claim 1 or 2, wherein
the protrusions on the tooth surface (15) are formed by teeth cutting in two directions, one of which is inclined clockwise by 20° and the other of which is inclined counterclockwise by 20° with respect to a horizontal direction.

4. A gripper (1) to which the gripping tooth according to any one of claims 1 to 3 is mounted.
